# EUROPEAN PATENT SPECIFICATION

(11) **EP 3 858 536 B1**
(45) Date of publication and mention of the grant of the patent: **02.11.2022**
(21) Application number: 19865348.7
(22) Date of filing: 17.09.2019
(51) Int. Cl.: B23K 26/38, B23K 26/08, G05B 19/18, B23K 101/04, B23K 101/28

(54) **LASER MACHINING METHOD AND LASER MACHINING DEVICE**
LASERBEARBEITUNGSVERFAHREN UND LASERBEARBEITUNGSVORRICHTUNG
PROCÉDÉ D'USINAGE PAR LASER ET DISPOSITIF D'USINAGE PAR LASER

(30) Priority: 27.09.2018 JP 2018182239
(43) Date of publication of application: 04.08.2021
(73) Proprietor: Amada Co., Ltd., Isehara-shi, Kanagawa 259-1196 (JP)
(72) Inventor: MIYABUCHI Shiroyuki, Isehara-shi, Kanagawa 259-1196 (JP); YAMAZAKI Takahiro, Isehara-shi, Kanagawa 259-1196 (JP); KAMIYAMA Takayuki, Isehara-shi, Kanagawa 259-1196 (JP); MASHIKO Yutaka, Isehara-shi, Kanagawa 259-1196 (JP); SATOU Haruya, Isehara-shi, Kanagawa 259-1196 (JP)
(74) Representative: Grünecker Patent- und Rechtsanwälte PartG mbB
(86) International application number: PCT/JP2019/036269
(87) International publication number: WO 2020/066728

(56) References cited:
- EP-A1- 2 998 809
- CN-A- 101 264 553
- CN-A- 105 772 950
- JP-A- H0 577 078
- JP-A- H06 218 550
- JP-A- H07 108 373
- JP-A- 2014 106 761
- JP-A- 2015 022 391
- JP-A- 2015 123 462
- JP-B2- 6 209 084

## Description

### Technical Field

The present disclosure relates to a laser processing method and a laser processing device.

### Background Art

When a material to be processed such as a shape steel and a steel pipe is cut with a laser beam, if an irradiation direction of the laser beam in a cut part and an extending direction of the material to be processed match each other or become close to each other, the thickness of the part to be cut may become large to make cutting difficult.

Patent Literature 1 (which forms the basis for the preamble of the independent claims) describes a technique that processes a part to be cut when the part to be cut has such a thickness that the part is difficult to cut, by forming a notch or a waste hole in the part in advance so that the part to be cut has such a thickness that the part can be cut in the irradiation direction of the laser beam.

### Citation List

### Patent Literature

Patent Literature 1: Japanese Patent No. 6025652

JP2015123462A discloses a laser processing method and a laser processing program creation apparatus for processing an angle steel or a channel steel into a predetermined shape by a laser processing machine.

JP2015022391A discloses an automatic programming device for preventing processing defects when processing an angle steel by a laser processing machine.

JPH06218550A discloses a plasma cutting method of a shaped steel.

JP2014106761A discloses a determination method and a determination program for determining a processing range and a processing order in forming a hole or notch across multiple surfaces in a material.

JPH07108373A discloses a torch supporting device for cutting an end portion of a shaped steel by gas fusing, plasma fusing, or the like.

### Summary

The present invention is defined by the subject matter of the independent claims. Embodiments are defined by the dependent claims.

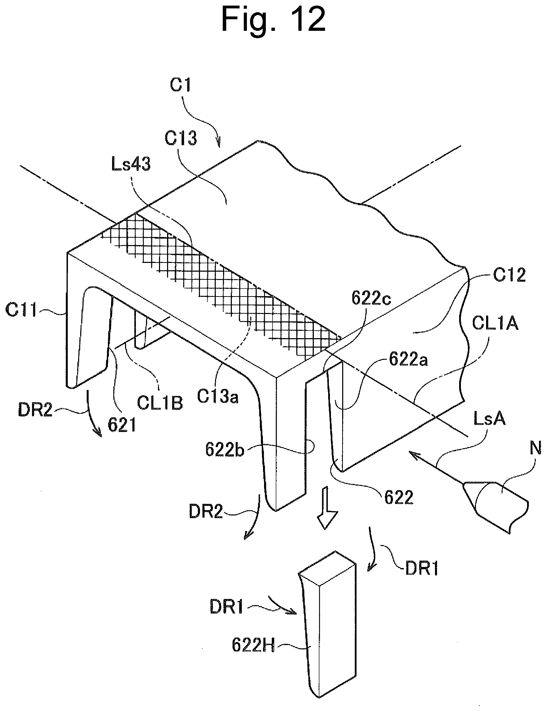

Figure 12 illustrates a state where notches 621 and 622 are respectively formed in advance in flanges C11 and C12 by the technique described in Patent Literature 1 in order to laser-cut a channel steel C1 that is a material to be processed at a position of a cutting line Ls43 extending in a width direction. Figure 12 corresponds to Figure 12 (c) in Patent Literature 1.

For example, to form the notch 622 of the flange C12, the flange C12 is irradiated with a laser beam LsA from a nozzle N along a path corresponding to the notch 622 from an outer lateral side. Thereby, a cutout piece 622H corresponding to the shape of the notch 622 is cut out, and is separated from the flange C12 by free fall.

Incidentally, it has become clear that when a large number of the cutting processes are executed, the tip end side of the cutout piece 622H may be held by the flange C12 and may not separate by free fall.

Consequently, in the site of processing for forming the notches 622, workers confirm presence or absence of separation by free fall of the cutout pieces 622H, and when the cutout piece 622H is not separated from the flange C12, a manual operation for separating the cutout piece 622H is required, so that working efficiency is reduced.

Therefore, after examining the reason why the cutout piece 622H is held by the tip end portion of the flange C12 and does not freely fall even though the cutout piece 622H is cut from the flange C12, it has been presumed that the cause is warp deformation of a web C13 in the shape steel due to heating and cooling of the web C13.

More specifically, in Figure 12, when cutting the portions at the back sides of side edge portions 622a and 622b, and a back edge portion 622c that are portions close to the web C13 in the notch 622 with a laser beam, the laser beam LsA that passes through the flange C12 passes through a position extremely close to an inner surface C13a of the web C13. Further, a part of the laser beam LsA diffuses by the cutting and reaches the inner surface C13a of the web C13. This similarly applies in formation of a notch 621 of a flange C11.

Consequently, a portion with cross hatching that corresponds to the back edge portion 622c close to the cutting line Ls43, at an inner surface C13a side of the web C13 is heated by the laser beam LsA to increase in temperature and thereafter, naturally decreases in temperature.

Due to the temperature increase and decrease, the web C13 tries to perform warp deformation that makes the inner surface C13a on a heated side concave. The warp deformation is expressed as a sum of warp deformation (arrow DR1) around an axial line CL1A extending in a width direction of the web C13, and warp deformation (arrow DR2) around an axial line CL1B extending in a length direction of the web C13.

Heat input efficiency of the laser beam LsA to the web C13 is higher in fiber laser that has become widespread in recent years than in CO₂ laser, and a cut width (calf width) is narrower in fiber laser than in CO₂ laser.

Therefore, actual situations are such that the occurrence frequency of warp deformation due to increase and decrease of the member temperature is high in fiber lasers, and a possibility that the cutout pieces are held and do not fall due to warp deformation that occurs is also high in fiber lasers.

One or more embodiments has an object to provide a laser processing method and a laser processing device by which working efficiency is hardly reduced in laser processing that cuts a steel material.

According to a first aspect of one or more embodiments, there is provided a laser processing method including setting a cutting line across a first plate-shaped part and a second plate-shaped part to a workpiece including the first plate-shaped part and the second plate-shaped part connected to the first plate-shaped part in a direction to cross the first plate-shaped part, forming, by cutting with a laser beam, a notch portion in the second plate-shaped part so that a cutout piece cut out by forming the notch portion is divided into a tip end portion and a base portion, the notch portion opening to a tip end portion of the second plate-shaped part and being along the cutting line, and cutting the first plate-shaped part along the cutting line by irradiation with the laser beam from one direction.

According to a second aspect of one or more embodiments, there is provided a laser processing device including a processing head configured to emit a laser beam, and a controller configured to control emission of the laser beam and movement of the processing head on a predetermined path, wherein when the controller controls a workpiece including a first plate-shaped part and a second plate-shaped part connecting to the first plate-shaped part in a direction to cross the first plate-shaped part such that the workpiece is cut with the laser beam, the controller is configured to set a cutting line across the first plate-shaped part and the second plate-shaped part, form a notch portion in the second plate-shaped part by controlling emission of the laser beam and movement of the processing head so that a cutout piece cut out by forming the notch portion is divided into a tip end portion and a base portion, the notch portion opening to a tip end portion of the second plate-shaped part and being along the cutting line, and control emission of the laser beam and movement of the processing head so as to cut the first plate-shaped part along the cutting line by irradiation with the laser beam from one direction.

According to the laser processing method and the laser processing device, it is possible to obtain the effect that the working efficiency is hardly reduced in laser processing for cutting a steel material.

### Brief Description of Drawings

[Figure 1] Figure 1 is a block diagram illustrating a laser processing system ST including a laser processing device 51 according to one or more embodiments.
[Figure 2] Figure 2 is a cross-sectional view of a channel steel W to be processed by the laser processing device 51 and a part of a development view T1 of the channel steel W.
[Figure 3] Figure 3 is a first view illustrating a processing step in the development view T1.
[Figure 4] Figure 4 is a second view illustrating a processing step in the development view T1.
[Figure 5] Figure 5 is a third view illustrating a processing step in the development view T1.
[Figure 6] Figure 6 is a fourth view illustrating a processing step in the development view T1.
[Figure 7] Figure 7 is a perspective view explaining a state at a time of cutting the channel steel W with a laser beam Ls at a position of a cutting line Lc1.
[Figure 8] Figure 8 is a first view illustrating another processing step in the development view T1.
[Figure 9] Figure 9 is a second view illustrating another processing step in the development view T1.
[Figure 10] Figure 10 is a view illustrating details of a part A in Figure 6.
[Figure 11] Figure 11 is a flowchart illustrating a procedure of processing executed by a slit addition determiner 23 included by a CAM device 20 of the laser processing system ST.
[Figure 12] Figure 12 is a perspective view illustrating conventional cutting.

### Description of Embodiment

A laser processing device according to one or more embodiments will be described based on a laser processing device 51 and a laser processing system ST including the laser processing device 51. Note that a channel steel W in the following explanation is a workpiece similar to the aforementioned channel steel C1.

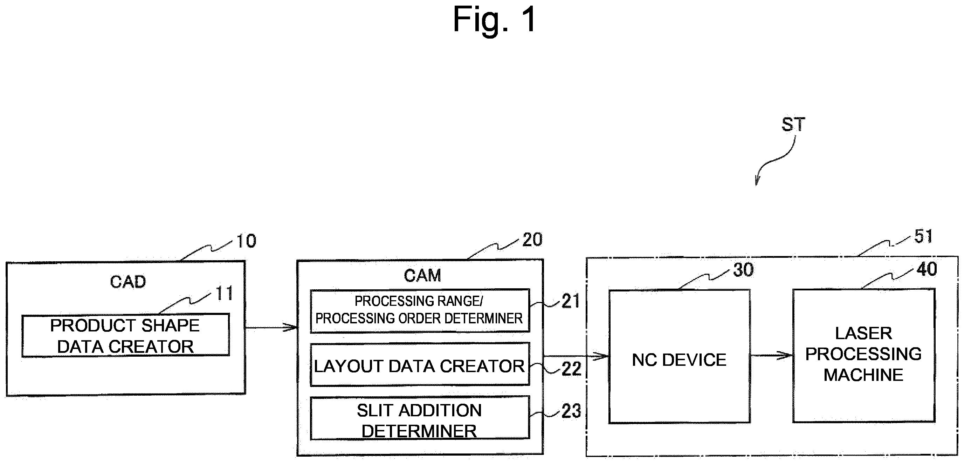

Figure 1 is a block diagram illustrating the laser processing system ST. The laser processing system ST is configured by including a CAD device 10, a CAM device 20, an NC device 30, and a laser processing machine 40.

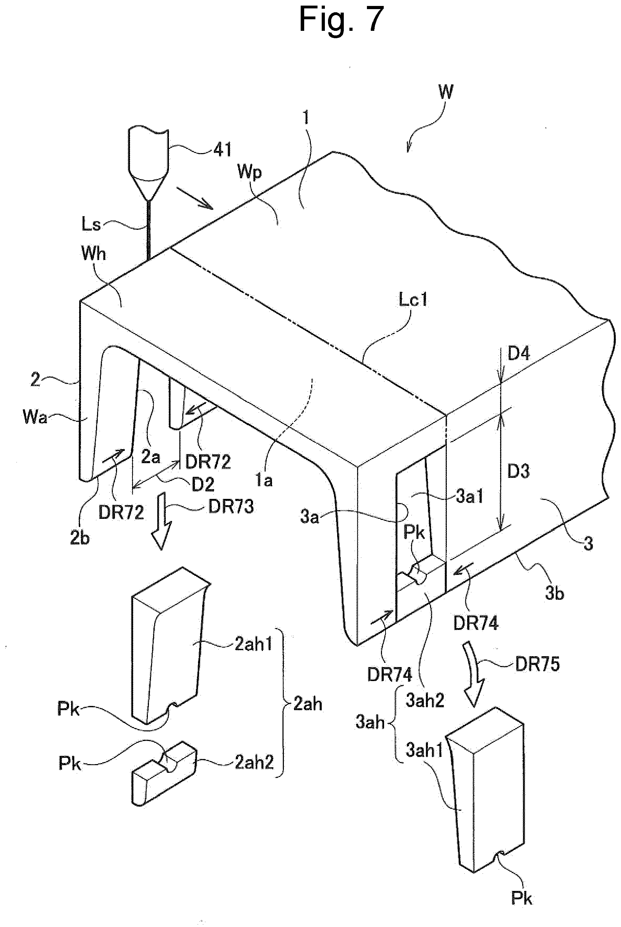

The laser processing device 51 is configured by including at least the NC device 30 and the laser processing machine 40 among them. The NC device 30 is one example of a controller, and the laser processing machine 40 has a processing head 41 (Figure 7) having a nozzle configured to emit a laser beam Ls and a laser oscillator (not illustrated). The laser processing device 51 uses at least a shape steel or a steel pipe as a workpiece, and can perform processing such as cutting with the laser beam Ls while changing a posture of the workpiece.

In the laser processing system ST, the CAD device 10 has a product shape data creator 11, and the CAM device 20 has a processing range/processing order determiner 21, a layout data creator 22, and a slit addition determiner 23.

The product shape data creator 11 of the CAD device 10 creates product shape data of a product Wp (Figure 7) formed from the workpiece. The CAM device 20 creates development view data of the product based on development view data of the workpiece and the product shape data created by the CAD device 10.

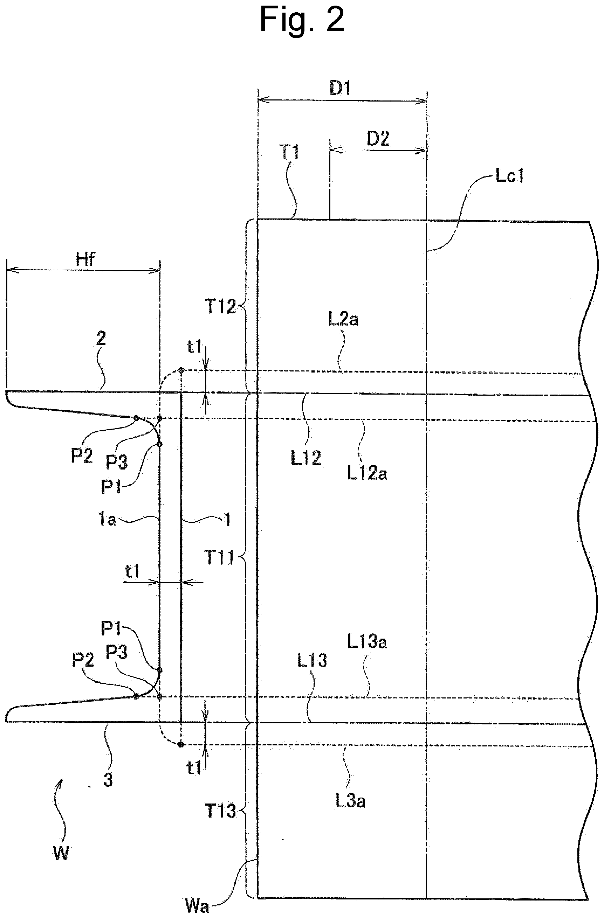

Figure 2 illustrates a cross-section of the channel steel W that is one example of the workpiece, and a part of a development view T1 based on the development view data of the channel steel W created by the CAM device 20 by matching a position of the web 1 to the cross-section of the channel steel W and the part of the development view T1. The channel steel W is a long member with a same cross section, and has a plate-shaped web 1 having length, and plate-shaped flanges 2 and 3 that are opposing side walls extending in a same direction from both ends in a width direction of the web 1.

The processing range/processing order determiner 21 determines a processing range and a processing order to the workpiece, and the layout data creator 22 creates layout data that shows layout of how to process with the laser beam Ls to the workpiece. Thereby, the laser processing system ST can execute cutting of the workpiece when the workpiece is at least a shape steel and a steel pipe.

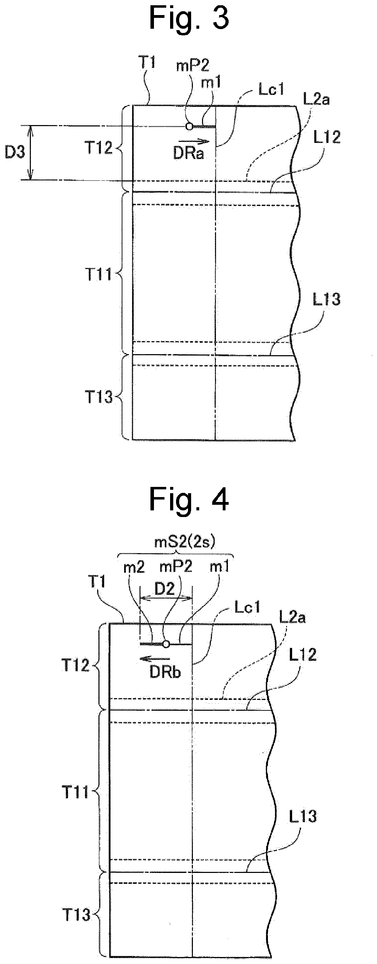

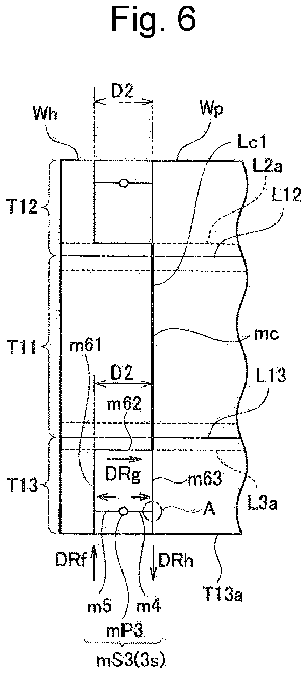

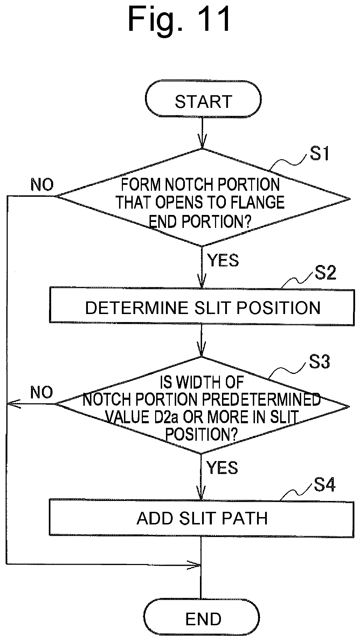

The layout data creator 22 of the CAM device 20 determines whether to form a hole or form a notch portion, and parts or the like when forming the hole or the notch portion, for the web 1 and the flanges 2 and 3 by using the technique described in Patent Literature 1 when cutting the channel steel W in the width direction. The slit addition determiner 23 determines presence or absence of formation of the notch portions that open to flange ends when the layout data creator 22 determines formation of the notch portions, and determines whether or not to add slits 2s and 3s (refer to Figure 4 and Figure 6) at a time of formation of notch portions 2a and 3a (refer to Figure 7) by a procedure illustrated in Figure 11 (steps S1 to S4). Details of the procedure will be described later.

After determining addition of the slits 2s and 3s, the slit addition determiner 23 includes slit paths mS2 and mS3 (refer to Figure 4 and Figure 6) in an irradiation path of the laser beam Ls along which notches are formed.

Cutting of cutout pieces 2ah and 3ah by the slit paths mS2 and mS3 will be described with reference to Figure 2 to Figure 7. First, the channel steel W and the development view T1 corresponding to the channel steel W illustrated in Figure 2 will be described. The cutout pieces 2ah and 3ah are portions to be scraps that are cut out by forming the notch portions 2a and 3a.

The channel steel W has the web 1, the flange 2 and the flange 3 as described above. The development view T1 is a diagram illustrating a state where the flanges 2 and 3 are extended and developed on a same plane as the web 1. In the development view T1, a ridge line L12 corresponding to a ridge line between the web 1 and the flange 2, and a ridge line L13 corresponding to a ridge line between the web 1 and the flange 3 are set.

In the development view T1, a range between the ridge line L12 and the ridge line L13 is a web region T11 corresponding to the web 1. Further, a range outside the ridge line L12 is a flange region T12 corresponding to the flange 2, and a range outside the ridge line L13 is a flange region T13 corresponding to the flange 3.

In the development view T1, a thickness line L2a and a thickness line L3a that correspond to a thickness t1 of the web 1 are respectively set in the flange region T12 and the flange region T13. Concerning internal corner portions each with R of the web 1 and the flanges 2 and 3, inner thickness lines L12a and L13a are set in the web region T11 correspondingly to intersection points P3 of a virtual line that is a result of extending an inner surface 1a of the web 1 with the thickness t1, and orthogonal lines passing through points P2 that are R start points on flanges 2 and 3 sides.

In the following explanation, processing that is applied to the channel steel W is processing that cuts the channel steel W at a position of a cutting line Lc1 that is separated from an end surface Wa of the channel steel W by a predetermined distance D1 and is parallel with the end surface Wa. By the processing, as illustrated in Figure 6, a portion at a right side in Figure 2 to the cutting line Lc1 is produced as a product Wp that is a laser processed product, and a portion at a left side is a scrap Wh. The cutting line Lc1 is virtually set across the flange region T12, the web region T11, and the flange region T13. In other words, as illustrated in Figure 7, the cutting line Lc1 is set across the flange 2, the web 1, and the flange 3.

Further, start and stop of irradiation with the laser beam Ls, movement of the processing head 41 that is movement of an irradiation position of the laser beam Ls on a predetermined path, posture change of the channel steel W, optimization of beam characteristics and focus following processing and the like are controlled by the NC device 30.

Notches that are set by the CAM device 20 in this example are notch portions 2a and 3a in same shapes that are set to the flange region T12 and the flange region T13, and are formed in the flange 2 and the flange 3 illustrated in Figure 7. As illustrated in Figure 7, for example, the notch portion 2a is a notch that has a width D2 from the cutting line Lc1 to an end surface Wa side, and opens to a tip end portion 2b of the flange 2. The notch portion 2a is formed by cutting a cutting path including a first path m1, a second path m2, and a third path m3 that will be described later.

### <Formation of cutout piece 2ah by slit path mS2>

### (Formation of pierced hole mP2 to first path m1 illustrated in Figure 3)

A pierced hole mP2 is formed by the laser beam Ls in a position separated outward by a predetermined distance D3 from the thickness line L2a, in a range to be the notch portion 2a in the flange region T12. Next, as shown by an arrow DRa, the laser beam Ls is moved on the first path m1 extending to the cutting line Lc1 parallel with the thickness line L2a from a state where an inside of the pierced hole mP2 is irradiated with the laser beam Ls, and the flange region T12 is cut. Thereafter, irradiation with the laser beam Ls is stopped.

### (Formation of second path m2 illustrated in Figure 4)

As shown by an arrow DRb, from the state where the inside of the pierced hole mP2 is irradiated with the laser beam Ls, the laser beam Ls is moved on the second path m2 to a position that is the width D2 from the cutting line Lc1, in an opposite direction to the first path m1 parallel with the thickness line L2a, and the flange region T12 is cut. Thereafter, irradiation with the laser beam Ls is stopped.

As illustrated in Figure 4, a slit path mS2 is configured by the pierced hole mP2, and the first path m1 and the second path m2, and the slit 2s is formed by cutting along the slit path mS2.

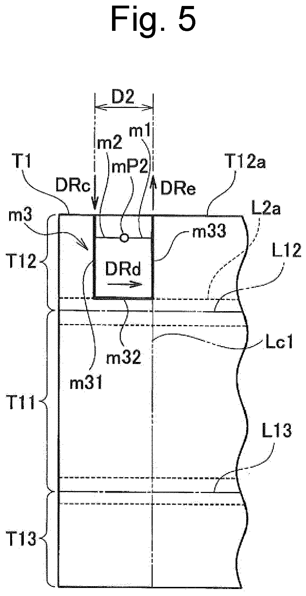

### (Formation of third path m3 illustrated in Figure 5)

At a position that is the width D2 from the cutting line Lc1, as shown by an arrow DRc, the laser beam Ls is moved parallel with the cutting line Lc1 from outside in a width direction of the flange 2, and a path m31 in a straight line to the thickness line L2a is cut. When the laser beam Ls reaches the thickness line L2a, a path m32 is cut to the cutting line Lc1 along the thickness line L2a as shown by an arrow DRd. When the laser beam Ls reaches the cutting line Lc1, a path m33 that passes through an outer edge T12a of the flange region T12 is cut along the cutting line Lc1, as shown by an arrow DRe. The paths m31 to m33 are collectively referred to as the third path m3.

As illustrated in Figure 7, by cutting along the third path m3, the notch portion 2a is formed in the flange 2, and the cutout piece 2ah is cut out. The cutout piece 2ah has the slit 2s formed therein, and thereby is divided into a notch base piece 2ah1 that is a portion at a web 1 side, and a notch tip end piece 2ah2 that is a portion at a tip end side. Further, depending on a size of the pierced hole mP2, pierced hole marks Pk are left as traces in the notch base piece 2ah1 and the notch tip end piece 2ah2.

### <Formation of cutout piece 3ah by slit path mS3>

### (Formation of pierced hole mP3, and fourth path m4 to fifth path m5 illustrated in Figure 6)

A pierced hole mP3, and a fourth path m4 to a fifth path m5 are paths forming the slit 3s in the flange 3, and are set in the flange region T13 similarly to the pierced hole mp2 and the first path m1 to the third path m3 in the flange region T12.

In other words, the pierced hole mP3 corresponds to the pierced hole mP2, and the fourth path m4 and the fifth path m5 respectively correspond to the first path m1 and the second path m2. As illustrated in Figure 6, a slit path mS3 is configured by the pierced hole mP3 and the fourth path m4 and the fifth path m5, and by cutting of the slit path mS3, the slit 3s is formed in the flange 3.

### (Formation of sixth path m6 illustrated in Figure 6)

At the position that is the width D2 from the cutting line Lc1, as shown by an arrow DRf, the laser beam Ls is moved parallel with the cutting line Lc1 from outside in a width direction of the flange 3, and a path m61 in a straight line to the thickness line L3a is cut. When the laser beam Ls reaches the thickness line L3a, a path m62 to the cutting line Lc1 is cut along the thickness line L3a, as shown by an arrow DRg. When the laser beam Ls reaches the cutting line Lc1, as shown by an arrow DRh, a path m63 that passes through an outer edge T13a of the flange region T13 is cut along the cutting line Lc1. The paths m61 to m63 are collectively referred to as a sixth path m6.

As illustrated in Figure 7, by cutting of the sixth path m6, the notch portion 3a is formed in the flange 3, and the cutout piece 3ah is cut out. The cutout piece 3ah has a slit 3s formed therein, and thereby is divided into a notch base piece 3ah1 that is a portion at the web 1 side, and a notch tip end piece 3ah2 that is a portion at a tip end side. Further, depending on a size of the pierced hole mP3, pierced hole marks Pk are left as traces in the notch base piece 3ah1 and the notch tip end piece 3ah2.

After the notch portions 2a and 3a are formed, the product Wp is obtained by next cutting.

### <Cutout of product Wp>

### (cutting of path mc along cutting line Lc1 illustrated in Figure 6)

After the notch portions 2a and 3a are formed by processing to the sixth path m6, irradiation with the laser beam Ls is given from one direction and the laser beam Ls is moved along the cutting line Lc1, and a path mc with the cutting line Lc1 as a cut surface is cut. The path mc is set along the cutting line Lc1 with a path between the thickness line L2a of the flange region T12 and the thickness line L3a of the flange region T13, or a path that includes the path between the thickness line L2a and the thickness line L3a and is a little longer than the path between the thickness line L2a and the thickness line L3a.

Thereby, the channel steel W is divided into the product Wp that is a portion on a right side of the cutting line Lc1 in Figure 6, and the scrap Wh that is a non-product on a left side. In other words, a cut surface on a product Wp side along the path mc of product cutting is an outer end surface of the product Wp.

When the aforementioned notch portions 2a and 3a are formed, the inner surface 1a of the web 1 is remarkably heated, and thereafter cooled, in cutting on the path m32 along the thickness line L2a with the laser beam Ls, cutting on the path m62 along the thickness line L3a, and cutting of the portions close to the web 1 on the paths m31, m33, m61 and m63.

By a temperature change in the heating and cooling, the web 1 tries to perform warp deformation that makes the inner surface 1a concave, as described above. In other words, as illustrated in Figure 7, deformation occurs with cutting at the time of the cutout pieces 2ah and 3ah being cut out from the flanges 2 and 3. In detail, as shown by the arrows DR72 and DR74, in the flanges 2 and 3, deformation in directions to narrow the widths of the notch portions 2a and 3a due to warp deformation of the web 1 occurs.

When an amount of the deformation is less than the cut width, the cutout piece 2ah in the notch portion 2a naturally falls by its own weight with the notch base piece 2ah1 and the notch tip end piece 2ah2, as shown by a white arrow DR73.

On the other hand, when the amount of deformation that narrows the widths of the notch portions 2a and 3a is equal to or more than the cut width, the notch tip end piece 3ah2 of the cutout piece 3ah in the notch portion 3a is held by the flange 3 and is left without falling, and only the notch base piece 3ah1 can naturally fall by its own weight, as shown by a white arrow DR75. Consequently, the notch base piece 3ah1 is removed by free fall, and an opening portion 3a1 that opens with a distance D3 in a direction to separate and contact the web 1 is formed in the notch portion 3a.

Accordingly, in cutting of the path mc of product cutting along the cutting line Lc1, a cutting thickness by the laser beam Ls at both edge portions in the width direction of the web 1 where the flanges 2 and 3 are present is a thickness of a distance D4 that is close to the thickness t1 of the web 1.

Therefore, even when the notch tip end piece 3ah2 remains to be held by the flange 3 as illustrated in Figure 7, it is possible to favorably cut the web 1 of the channel steel W continuously. Certainly, if both the notch base piece 2ah1 and the notch tip end piece 2ah2 freely fall like the cutout piece 2ah illustrated in Figure 7, it is possible to cut the channel steel W favorably.

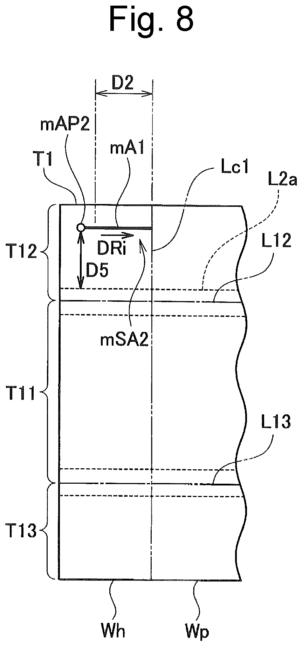

Formation positions of the pierced holes mP2 and mP3 are not limited to the insides of the cutout pieces 2ah and 3ah. As illustrated in Figure 8, the pierced hole mP2 may be formed at a position where the cutout piece 2ah is not formed in the scrap Wh. A cutting path for cutting the notch portion 2a in this case will be described.

### (Formation of pierced hole mAP2 to first path mA1 illustrated in Figure 8)

A pierced hole AP2 is formed by the laser beam Ls at a position separated from the thickness line L2a by a predetermined distance D5, outside the range of the notch portion 2a in the flange 2. Next, from a state where an inside of the pierced hole mAP2 is irradiated with the laser beam Ls, the laser beam Ls is moved on a first path mA1 extending to the cutting line Lc1, parallel with the thickness line L2a, as shown by an arrow DRi, and the flange region T12 is cut. Thereafter, irradiation with the laser beam Ls is stopped.

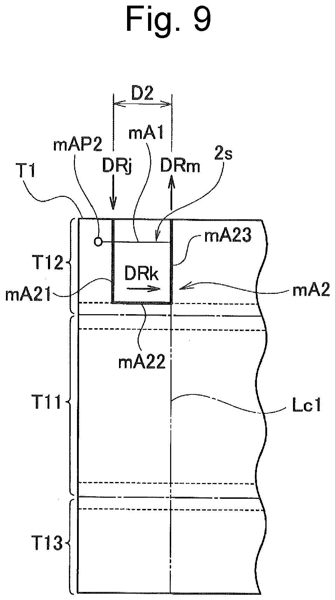

A slit path mSA2 illustrated in Figure 8 is configured by the pierced hole mAP2 and the first path mA1, and by cutting along the slit path mSA2, the slit 2s similar to the case of cutting along the slit path mS2 is formed as illustrated in Figure 9.

### (Formation of second path mA2 illustrated in Figure 9)

In a position that is the width D2 from the cutting line Lc1, the laser beam Ls is moved parallel with the cutting line Lc1 from outside of the flange region T12, as shown by an arrow DRj, and a path mA21 to the thickness line L2a is cut. When the laser beam Ls reaches the thickness line L2a, a path mA22 to the cutting line Lc1 is cut along the thickness line L2a, as shown by an arrow DRk. When the laser beam Ls reaches the cutting line Lc1, a path mA23 that passes through the outer edge T12a of the flange region T12 is cut along the cutting line Lc1, as shown by an arrow DRm. The paths mA21 to mA 23 are collectively referred to as a second path mA2.

The notch base piece and the notch tip end piece that are cut out along the above cutting path do not have the pierced hole marks Pk, unlike the notch base piece 2ah1 and the notch tip end piece 2ah2. Even when cutting is performed along the cutting path including the first path mA1 and the second path mA2, the cutting thicknesses of both edge portions in the width direction of the web 1 where the flanges 2 and 3 are present can be made the thickness of the distance D4 close to the thickness t1 of the web 1, similarly to the case where cutting is performed along the cutting path including the first path m1, the second path m2, and the third path m3, and therefore it is possible to execute cutting favorably.

As described above, whether or not to form the slits 2s and 3s described above is determined by the slit addition determiner 23 included by the CAM device 20. A determination procedure will be described with reference to Figure 11.

The slit addition determiner 23 determines whether or not the layout data creator 22 determines to form at least one of the notch portions 2a and 3a that open to the tip end portions 2b and 3b of the flanges 2 and 3 (step S1).

When determination in step S1 is negative (NO), the slit addition determiner 23 directly ends the processing.

On the other hand, when determination in step S1 is affirmative (YES), and the notch portion 2a is determined to be formed, the slit addition determiner 23 sets a position to form the slit 2s in the notch portion 2a (step S2). Specifically, the position to form the slit 2s is set to a smaller one of a position that is 15 mm from the tip end portion 2b of the flange 2, and a position that is 1/3 of a height Hf of the flange 2 from the tip end portion 2b. Further, when the distance D3 from the thickness line L2a to the set position of the slit 2s is less than a predetermined value, there is a possibility that escape of the laser beam Ls passing through the web 1 at the time of cutting on the path mc of product cutting is influenced, and therefore, presence or absence of addition of the slit is artificially determined in consideration of other factors. The predetermined value of the distance D3 is, for example, 30 mm.

The slit addition determiner 23 grasps the width D2 of the notch portion 2a in the set formation position of the slit 2s by referring to the layout data generated by the layout data creator 22, and determines whether or not the width D2 is equal to or more than a predetermined value D2a (step S3). As the aforementioned notch portions 2a and 3a, the notch portions each in a rectangular shape with a constant width are described, but the width may be set to differ at a tip end side and a base side according to a shape of the product Wp.

When the width D2 is small, and the cutout pieces 2ah and 3ah are excessively elongated, the masses are small, and the cutout pieces 2ah and 3ah are caught and do not fall freely. The predetermined value D2a is, for example, 2 mm.

When determination in step S3 is negative (NO), the slit addition determiner 23 does not add a slit, and directly ends the processing. When the determination in step S3 is affirmative (YES), the slit addition determiner 23 includes the slit path mS2 in the cutting path so that the slit 2s is formed (step S4)

In the first path m1 and the second path m2 of the cutting path and the first path mA1 of the cutting path for forming the aforementioned slit 2s, the NC device 30 may control a stop position of the laser beam Ls as follows.

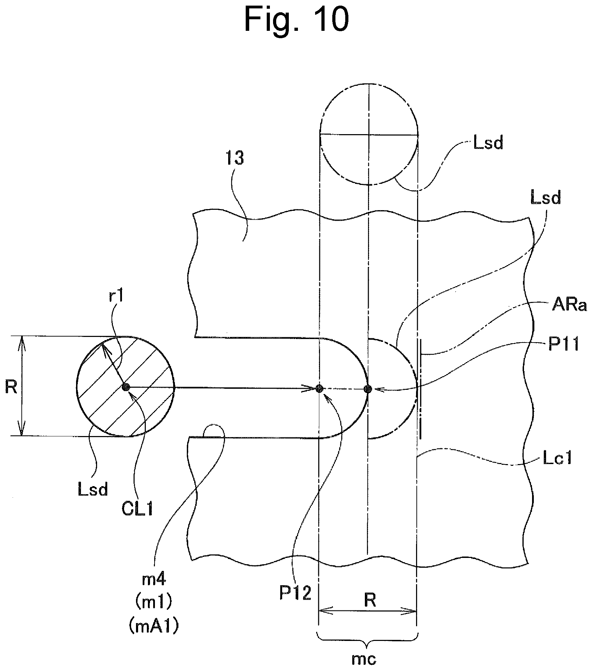

Figure 10 is a view explaining details of a part A in Figure 6. In Figure 10, a luminous flux of the laser beam Ls with which the flange 3 is irradiated is a beam Lsd with a radius r1 (diameter R).

The layout data creator 22 of the CAM device 20 sets an end point position in the fourth path m4, of a center CL1 of the beam Lsd short of a position P11 where the beam Lsd approaching the cutting line Lc1 starts to hit the cutting line Lc1. In other words, the end point position is set at a position separated from the cutting line Lc1 by the radius r1 of the beam Lsd or more.

For example, the end point position is set to a position where a distance from the cutting line Lc1 is the diameter R. In this case, when the center CL1 of the beam Lsd reaches a position P12 that is short of the cutting line Lc1 by the diameter R, movement of the laser beam Ls is stopped. It is possible to perform the control similarly in the first paths m1 (Figure 3) and mA1 (Figure 8) corresponding to the fourth path m4.

In this way, movement of the laser beam Ls in the fourth path m4, the first path m1, and the first path mA1 is stopped at the position short of the position P11 so that the beam Lsd of the laser beam Ls does not hit the cutting line Lc1. Thereby, it is possible to prevent a range ARa (Figure 10) corresponding to the slits 2s and 3s of the end surface (surface corresponding to the cutting line Lc1) of the product Wp to be cut out from being in a different state from other ranges due to the influence of the heat of the laser beam Ls at the time of cutting and forming the slits 2s and 3s, and affecting appearance quality or physical properties.

The workpiece may be another shape steel or a pipe steel without being limited to the aforementioned channel steel W. For example, the workpiece may be a member having a first plate-shaped part such as the web 1, and a second plate-shaped part such as the flanges 2 and 3 that connect to the first plate-shaped part in a direction to cross the first plate-shaped part. Further, the workpiece is not limited to a long member in which a cross-sectional shape is a constant shape like a channel steel and a steel pipe, but may be, for example, in a box shape other than the long member.

Addition of the slits 2s and 3s to the cutout pieces 2ah and 3ah described above can be applied in the following case, regardless of the shape of the workpiece. In other words, addition of the slits 2s and 3s can be applied when the notch portion can be formed in the part to be cut as pre-processing for reducing a cutting thickness in advance, when the cutting thickness of the part to be cut is so large that the part to be cut cannot be cut due to the shape of the workpiece in processing of cutting the workpiece with the laser beam Ls.

In the above described cutting path, the moving directions of the laser beam Ls are not limited to the aforementioned directions. The moving directions of the laser beam Ls may be any directions if only the cutout pieces 2ah and 3ah having the slits 2s and 3s are formed before execution of processing on the path mc of cutting along the cutting line Lc1.

The laser beam Ls is not limited to the laser beam emitted by the fiber laser. In place of the fiber laser, carbon dioxide laser, disk laser, YAG laser, diode laser, excimer laser and the like may be used.

The NC device 30 as the controller does not have to be included as an integrated structure in the laser processing device 51. The NC device 30 may be provided as a separate body from the laser processing machine 40, and may be provided to be communicable with the laser processing machine 40 wirelessly or by wire.

## Claims

1. A laser processing method, comprising:
setting a cutting line (Lc1) across a first plate-shaped part (1) and a second plate-shaped part (2, 3) to a workpiece (W) including the first plate-shaped part (1) and the second plate-shaped part (2, 3), the second plate-shaped part (2, 3) connected to the first plate-shaped part (1) in a direction to cross the first plate-shaped part (1),
**characterized in that** the laser processing method further comprises:
forming, by cutting with a laser beam (Ls), a notch portion (2a, 3a) in the second plate-shaped part (2, 3) so that a cutout piece (2ah, 3ah) cut out by forming the notch portion (2a, 3a) is divided into a tip end portion (2ah2, 3ah2) and a base portion (2ah1, 3ah1), the notch portion (2a, 3a) opening to a tip end portion (2b, 3b) of the second plate-shaped part (2, 3) and being along the cutting line (Lc1); and
cutting the first plate-shaped part (1) along the cutting line (Lc1) by irradiation with the laser beam (Ls) from one direction.

2. The laser processing method according to claim 1, wherein the step of forming the notch portion (2a, 3a) comprises:
moving the laser beam (Ls) in a direction to approach the cutting line (Lc1) to divide the cutout piece (2ah, 3ah) into the tip end portion (2ah2, 3ah2) and the base portion (2ah1, 3ah1); and
stopping the laser beam (Ls) that is moved in the direction to approach the cutting line (Lc1) at a position separated from the cutting line (Lc1) by a distance equal to or more than a beam radius (r1) of the laser beam (Ls) for irradiation when the notch portion (2a, 3a) is cut along the cutting line (Lc1).

3. A laser processing device (51), comprising:
a processing head (41) configured to emit a laser beam (Ls); and
a controller (30) configured to control emission of the laser beam (Ls) and movement of the processing head (41) on a predetermined path,
**characterized in that** the controller (30) is configured to
set a cutting line (Lc1) across a first plate-shaped part (1) and a second plate-shaped part (2, 3) of a workpiece (W) including the first plate-shaped part (1) and the second plate-shaped part (2, 3), the second plate-shaped part connected to the first plate-shaped part (1) in a direction to cross the first plate-shaped part (1),
form a notch portion (2a, 3a) in the second plate-shaped part (2, 3) by controlling emission of the laser beam (Ls) and movement of the processing head (41) so that a cutout piece (2ah, 3ah) cut out by forming the notch portion (2a, 3a) is divided into a tip end portion (2ah2, 3ah2) and a base portion (2ah1, 3ah1), the notch portion (2a, 3a) opening to a tip end portion (2b, 3b) of the second plate-shaped part (2, 3) and being along the cutting line (Lc1), and
control emission of the laser beam (Ls) and movement of the processing head (41) so as to cut the first plate-shaped part (1) along the cutting line (Lc1) by irradiation with the laser beam (Ls) from one direction.

4. The laser processing method according to claim 1 or 2 further comprising:
removing at least the base portion (2ah1, 3ah1) of the cutout piece (2ah, 3ah) before cutting the first plate-shaped part (1) along the cutting line (Lc1).

## Patentansprüche

1. Verfahren zur Laserbearbeitung, umfassend:
Anbringen einer Schnittlinie (Lc1) über ein erstes plattenförmiges Teil (1) und ein zweites plattenförmiges Teil (2, 3) an einem Werkstück (W), das das erste plattenförmige Teil (1) und das zweite plattenförmige Teil (2, 3) enthält, wobei das zweite plattenförmige Teil (2, 3) mit dem ersten plattenförmigen Teil (1) in einer Richtung verbunden ist, um das erste plattenförmige Teil (1) zu kreuzen,
**dadurch gekennzeichnet, dass** das Laserbearbeitungsverfahren weiterhin umfasst:
Ausbilden, durch Schneiden mit einem Laserstrahl (Ls), eines Kerbenabschnitts (2a, 3a) in dem zweiten plattenförmigen Teil (2, 3), so dass durch Ausbilden des Kerbenabschnitts (2a, 3a), dieser in einen Spitzenendabschnitt (2ah2, 3ah2) und einen Basisabschnitt (2ah1, 3ah1) unterteilt ausgeschnitten wird, wobei sich der Kerbenabschnitt (2a, 3a) zu einem Spitzenendabschnitt (2b, 3b) des zweiten plattenförmigen Teils (2, 3) öffnet und entlang der Schnittlinie (Lc1) liegt; und
Schneiden des ersten plattenförmigen Teils (1) entlang der Schnittlinie (Lc1) durch Bestrahlung mit dem Laserstrahl (Ls) aus einer Richtung.

2. Das Laserbearbeitungsverfahren nach Anspruch 1, wobei der Schritt des Ausbildens des Kerbenabschnitts (2a, 3a) umfasst:
Bewegen des Laserstrahls (Ls) in eine Richtung, um sich der Schnittlinie (Lc1) zu nähern, um das ausgeschnittene Stück (2ah, 3ah) in den Spitzenendabschnitt (2ah2, 3ah2) und den Basisabschnitt (2ah1, 3ah1) zu unterteilen; und
Anhalten des Laserstrahls (Ls), der in der Richtung bewegt wird, um sich der Schnittlinie (Lc1) zu nähern, an einer Position, die von der Schnittlinie (Lc1) durch einen Abstand getrennt ist, der gleich oder größer ist als ein Strahlradius (r1) des Laserstrahls (Ls) zur Bestrahlung, wenn der Kerbenabschnitt (2a, 3a) entlang der Schnittlinie (Lc1) geschnitten wird.

3. Eine Laserbearbeitungsvorrichtung (51), umfassend:
einen Bearbeitungskopf (41), der so konfiguriert ist, dass er einen Laserstrahl (Ls) aussendet; und
eine Steuerung (30), die so konfiguriert ist, dass sie die Emission des Laserstrahls (Ls) und die Bewegung des Bearbeitungskopfes (41) auf einem vorbestimmten Weg steuert,
**dadurch gekennzeichnet, dass** der Controller (30) so konfiguriert ist, dass er
Setzen einer Schnittlinie (Lc1) über ein erstes plattenförmiges Teil (1) und ein zweites plattenförmiges Teil (2, 3) eines Werkstücks (W), das das erste plattenförmige Teil (1) und das zweite plattenförmige Teil (2, 3) enthält, wobei das zweite plattenförmige Teil mit dem ersten plattenförmigen Teil (1) in einer Richtung verbunden ist, um das erste plattenförmige Teil (1) zu kreuzen,
Ausbilden eines Kerbenabschnitts (2a, 3a) in dem zweiten plattenförmigen Teil (2, 3) durch Steuern der Emission des Laserstrahls (Ls) und der Bewegung des Bearbeitungskopfes (41), so dass ein ausgeschnittenes Stück (2ah, 3ah), das durch Ausbilden des Kerbenabschnitts (2a, 3a) ausgeschnitten wird, in einen Spitzenendabschnitt (2ah2, 3ah2) und einen Basisabschnitt (2ah1, 3ah1) unterteilt wird, wobei sich der Kerbenabschnitt (2a, 3a) zu einem Spitzenendabschnitt (2b, 3b) des zweiten plattenförmigen Teils (2, 3) öffnet und entlang der Schnittlinie (Lc1) liegt, und
die Emission des Laserstrahls (Ls) und die Bewegung des Bearbeitungskopfes (41) zu steuern, um das erste plattenförmige Teil (1) entlang der Schnittlinie (Lc1) durch Bestrahlung mit dem Laserstrahl (Ls) aus einer Richtung zu schneiden.

4. Das Laserbearbeitungsverfahren nach Anspruch 1 oder 2 ferner umfassend:
Entfernen mindestens des Basisteils (2ah1, 3ah1) des Ausschnittes (2ah, 3ah) vor dem Schneiden des ersten plattenförmigen Teils (1) entlang der Schnittlinie (Lc1).

## Revendications

1. Procédé de traitement laser, comprenant :
l'établissement d'une ligne de coupe (Lc1) sur une première partie en forme de plaque (1) et une deuxième partie en forme de plaque (2, 3) d'une pièce (W) comprenant la première partie en forme de plaque (1) et la deuxième partie en forme de plaque (2, 3), la deuxième partie en forme de plaque (2, 3) étant connectée à la première partie en forme de plaque (1) dans une direction qui croise la première partie en forme de plaque (1),
**caractérisé en ce que** le procédé de traitement laser comprend en outre :
la formation, par découpe à l'aide d'un faisceau laser (Ls), d'une portion d'encoche (2a, 3a) dans la deuxième partie en forme de plaque (2, 3) de telle sorte qu'une pièce découpée (2ah, 3ah) qui est découpée en formant la portion d'encoche (2a, 3a) est divisée en une portion d'extrémité (2ah2, 3ah2) et une portion de base (2ah1, 3ah1), la portion d'encoche (2a, 3a) s'ouvrant vers une portion d'extrémité (2b, 3b) de la deuxième partie en forme de plaque (2, 3) et étant disposée selon la ligne de coupe (Lc1) ; et
la découpe de la première partie en forme de plaque (1) selon la ligne de coupe (Lc1) par irradiation du faisceau laser (Ls) depuis une direction.

2. Procédé de traitement laser selon la revendication 1, dans lequel l'étape de formation de la portion d'encoche (2a, 3a) comprend :
le déplacement du faisceau laser (Ls) dans une direction d'approche de la ligne de coupe (Lc1) pour diviser la pièce découpée (2ah, 3ah) en la portion d'extrémité (2ah2, 3ah2) et la portion de base (2ah1, 3ah1) ; et
l'arrêt du faisceau laser (Ls) qui est déplacé dans la direction d'approche de la ligne de coupe (Lc1) à une position séparée de la ligne de coupe (Lc1) d'une distance supérieure ou égale au rayon de faisceau (r1) du faisceau laser (Ls) pour une irradiation quand la portion d'encoche (2a, 3a) est découpée selon la ligne de coupe (Lc1).

3. Dispositif de traitement laser (51), comprenant :
une tête de traitement (41) configurée pour émettre un faisceau laser (Ls) ; et
un contrôleur (30) configuré pour contrôler l'émission du faisceau laser (Ls) et le déplacement de la tête de traitement (41) sur un chemin prédéterminé,
**caractérisé en ce que** le contrôleur (30) est configuré pour
établir une ligne de coupe (Lc1) sur une première partie en forme de plaque (1) et une deuxième partie en forme de plaque (2, 3) d'une pièce (W) comprenant la première partie en forme de plaque (1) et la deuxième partie en forme de plaque (2, 3), la deuxième partie en forme de plaque étant connectée à la première partie en forme de plaque (1) dans une direction qui croise la première partie en forme de plaque (1),
former une portion d'encoche (2a, 3a) dans la deuxième partie en forme de plaque (2, 3) en contrôlant l'émission du faisceau laser (Ls) et le déplacement de la tête de traitement (41) de telle sorte qu'une pièce découpée (2ah, 3ah) qui est découpée en formant la portion d'encoche (2a, 3a) est divisée en une portion d'extrémité (2ah2, 3ah2) et une portion de base (2ah1, 3ah1), la portion d'encoche (2a, 3a) s'ouvrant vers une portion d'extrémité (2b, 3b) de la deuxième partie en forme de plaque (2, 3) et étant disposée selon la ligne de coupe (Lc1) ; et
contrôler l'émission du faisceau laser (Ls) et le déplacement de la tête de traitement (41) de manière à découper la première partie en forme de plaque (1) selon la ligne de coupe (Lc1) par irradiation du faisceau laser (Ls) depuis une direction.

4. Procédé de traitement laser selon la revendication 1 ou 2, comprenant en outre :
l'enlèvement d'au moins la portion de base (2ah1, 3ahn1) de la pièce découpée (2ah, 3ah) avant de découper la première partie en forme de plaque (1) selon la ligne de coupe (Lc1).
